# EUROPEAN PATENT SPECIFICATION

(11) **EP 3 595 808 B1**
(45) Date of publication and mention of the grant of the patent: **05.08.2020**
(21) Application number: 18711307.1
(22) Date of filing: 13.03.2018
(51) Int. Cl.: B01J 20/16, B01J 20/22, B01J 20/28, B01J 20/30, B01J 20/32, C01B 33/26

(54) **ORGANIC - INORGANIC POROUS HYBRID MATERIAL, METHOD FOR OBTAINING IT AND USE THEREOF**
ORGANISCH-ANORGANISCHES PORÖSES HYBRIDMATERIAL, VERFAHREN ZUR HERSTELLUNG DAVON UND VERWENDUNG DAVON
MATÉRIAU HYBRIDE POREUX ORGANIQUE-INORGANIQUE, SON PROCÉDÉ D'OBTENTION ET SON UTILISATION

(30) Priority: 16.03.2017 ES 201730353
(43) Date of publication of application: 22.01.2020
(73) Proprietor: Industrias Quimicas del Ebro, S.A., 50016 Zaragoza (ES); Universidad De Zaragoza, 50009 Zaragoza (ES)
(72) Inventor: PÉREZ CACHO, Jorge José, 50016 Zaragoza (ES); CACHO BAILO, Fernando, 50018 Zaragoza (ES); CORONAS CERESUELA, Joaquín, 50018 Zaragoza (ES); TÉLLEZ ARISO, Carlos, 50018 Zaragoza (ES)
(74) Representative: Carvajal y Urquijo, Isabel
(86) International application number: PCT/EP2018/056267
(87) International publication number: WO 2018/167078

(56) References cited:
- EP-A1- 0 570 136
- EP-A1- 2 341 031
- TATE KIRBY L ET AL: "Zeolite adsorbent-MOF layered nanovalves for CH4storage", ADSORPTION, SPRINGER US, BOSTON, vol. 23, no. 1, 8 September 2016 (2016-09-08), pages 19-24, XP036132036, ISSN: 0929-5607, DOI: 10.1007/S10450-016-9813-X [retrieved on 2016-09-08]
- LOISEAU T ET AL: "A Rationale for the Large Breathing of the Porous Aluminum Terephthalate (MIL-53) Upon Hydration", CHEMISTRY - A EUROPEAN JOURNAL, WILEY - V C H VERLAG GMBH & CO. KGAA, DE, vol. 10, no. 6, 15 March 2004 (2004-03-15) , pages 1373-1382, XP002456416, ISSN: 0947-6539, DOI: 10.1002/CHEM.200305413
- G. FEREY ET AL: "A Chromium Terephthalate-Based Solid with Unusually Large Pore Volumes and Surface Area", SCIENCE, vol. 309, no. 5743, 23 September 2005 (2005-09-23), pages 2040-2042, XP055482105, US ISSN: 0036-8075, DOI: 10.1126/science.1116275

## Description

### TECHNICAL FIELD

The present invention describes a porous hybrid material comprising a MOF shell and a zeolite or amorphous aluminosilicate core. It belongs to porous materials development intended for absorption, separation, catalysis, uptake and controlled release of substances in the field of industrial chemistry.

### STATE OF THE ART

The metal-organic frameworks (MOF) are crystalline solids, formed by metallic clusters bound by organic ligands. These MOFs form micro- and mesoporous structures with a large specific surface area, even larger than 5000 m²/g, and great capacity of selective adsorption, uptake and separation.

The MOFs are the ordered micro- and mesoporous structures being technologically subsequent to zeolites. There is a great variety of organic metals and ligands available for synthesis thereof and which can be functionalized so as to show a determined chemical feature with on-demand structures and pore sizes, according to the application. Thanks to this versatility regarding the design, there are MOFs in the art which crystallize by imitating the already known topologies of zeolites.

Zeolites are hydrate crystalline porous aluminosilicates with the formula M_{2/n}O:Al₂O₃:SiO₂:H₂O, wherein "M" is a metal acting as a compensation cation and "n" is the valence thereof. They have rigid pore sizes acting as very restrictive molecular sieves. Rather than those having little aluminium content, those zeolites having a low ratio Si/AI and the LTA and FAU types are almost the only ones manufactured at industrial scale. They preferably adsorb CO₂ and H₂O, and are useful as adjuvants in detergents, ionic exchangers, adsorbents, molecular sieves and catalysts in petrochemical processes of catalytic cracking, among others. Their main drawback is that they have a relatively low stability.

The most common synthetic zeolites are zeolite A (LTA) in its 3A potassium, 4A sodium 4A and calcium 5A form according to its compensation cation, and X and Y (FAU) zeolites. These are commercialized in very thin powder form with crystal sizes between 0.1 and 30 micrometres. These materials are of great interest in the art due to the size of their ordered rigid pores, in the same range of 0.3 - 1.3 nanometres as the smallest gas molecules, which can therefore be selectively separated by molecular sieving.

Zeolites are inorganic and undergo a contraction in their structure during their dehydration. They also show bad compatibility with organic polymers, which form the continuous phase of mixed matrix membranes.

The EP 0790253 B1 was the first patent related to MOFs and filed by O.M. Yaghi together with NALCO Chemical Co. (USA). It practically covers all organic metals and ligands likely to result in a MOF. From that moment on, BASF has patented its own patent portfolio covering industrial-scale production of MOFs.

The application WO 2010058123 A1 describes the hydrothermal synthesis in the absence of MOF organic solvents based on aluminium and ligands of the carboxylate type in any form thereof. It proposes the technological advantage of a MOF synthesis more environmentally friendly than the previous ones.

Based on this application, BASF filed the WO 2012042410 A1, describing the optimized synthesis of structures comprising aluminium and bidentate ligands of the carboxylate type, among which there is benzenedicarboxylate or terephthalate (BDC or TPA) which resulted in MIL-53 ("Material Institute Lavoisier"-53), commercialized with the name Basolite® A100. It develops the MOF synthesis based on aluminium avoiding the use of nitrates and chlorides.

In relation in turn to the previous patent, Sánchez-Sánchez reported the synthesis of several MOFs at room temperature and only in water, also by addition of an organic ligand being deprotonated in the presence of a base or directly in the form of a salt (M. Sanchez-Sanchez et al., "Synthesis of metal-organic frameworks in water at room temperature: salts as linker sources", Green Chem., 2015, 17, 1500-1509). Although the resulting products have their pores free of unreacted ligand, the aluminium source does come from nitrates and chlorides.

Currently, several patents are filed being related to MOFs developing other types of synthesis and improvements of the procedures, as well as the application thereof. The WO 2011081779 A2, for example, describes the polymer and MOF combination in membranes separating CO₂ from methane. Thanks to their metal-organic nature, MOFs show good compatibility with polymers.

However, MOFs lack of narrow pores and of a rigid structure, qualities which are attractive for high efficiency separations. It is usual that these structures show flexibility or "breathing" phenomena in the presence of adsorbates or with pressure and temperature fluctuations, resulting in undesired variations in pore size.

When searching for porous materials for use thereof as high efficiency separators, it is considered the possibility of obtaining a simultaneous combination of MOFs properties with zeolites.

The state of the art describes hybrid materials combining MOFs and zeolites by solvothermal synthesis of MOF using zeolites as growth heterogeneous surfaces, but where both materials do not react and do not share the same structure or composition. In these processes addition of two reactants, a metallic source and an organic ligand is needed in the reaction (Y. Liu et al., "Fast syntheses of MOFs using nanosized zeolite crystal seeds in situ generated from microsized zeolites", Cryst. Growth Des., 2013, 13, 2697-2702; G. Zhu et al., "Synthesis of zeolite@metal-organic framework core-shell particles as bifunctional catalysts", RSC Adv., 2014, 4, 30673-30676; D.W. Lim et al., "An unprecedented single platform via cross-linking of zeolite and MOFs" Chem. Commun., 2016, 52, 6773-6776; T. Kirby et al. "Zeolite adsorbent-MOF layered nanovalves for CH4 storage", Adsorption, 2016, 23, 19-24).

These porous hybrid solids are based on an adjacent growth of a MOF onto a two-step support: impregnation with a metallic source of the material used as support, and the subsequent addition of the ligand and MOF crystallization in the presence of the support. The support material has a different chemical composition and shares neither atoms nor structure thereof with the MOF being grown, and it neither has influence on the structure being formed.

Such a material is described in what is considered the application EP 2341031 A1. This publication describes a two-part porous hybrid material comprising a MOF together with silica, a zeolite or activated carbon. In particular, it describes a method for obtaining a porous material comprising these materials being chemically bonded to MOF (paragraph [0014]). However, said chemical bond is then described only according to the method for obtaining the hybrid (paragraph [0044]). As it has been mentioned above, the method needs provision of an additional metal precursor as an essential condition, which is indicated both in the description and in the particular embodiment of the application. In the only example of EP 2341031 A1 zinc nitrate is reacted in dissolution with the organic ligand terephthalate in the presence of mesoporous silica. The result is that the materials forming the final hybrid compound are independent in their distribution and chemical composition: Zn₄O(TPA)₃ form the MOF, whereas the inorganic part is SiO₂. There are not strong covalent bonds between the two components of the hybrid. The bond between them is, out of physical or chemical need, weak such as by the van der Waals type, and this does not avoid the process of MOF breathing.

As the core is a rigid inorganic material, these structural tensions in the MOF limit the physical stability of the hybrid itself and can break the weak physical-chemical bonds. These temperature fluctuations result in defects, grooves or gaps in the matrices containing them, which reduce their mechanical and separation properties, acting as a bypass or preferences channels for the molecules intended to be separated ("T.S.Chung et al. "Mixed matrix membranes (MMMs) comprising organic polymers with dispersed inorganic fillers for gas separation", Prog. Polym. Sci., 32 (2007), 483-507).

The procedure described in EP 2341031 A1 needs both of the reactant sources, metal and ligand, in two different steps for the hybrid material synthesis. It does not describe or suggest the possibility of a process in a step with the only addition of the ligand and where the metal is provided by the inorganic material itself.

The supplementary addition of the metal has two main consequences: the first one is that MOF growth is not limited to the surface of the inorganic material used as support. It shall then become necessary to reduce additional costs in the process derived from removal of free MOF which has grown in dissolution, the separation efficiency of which will affect purity of the final hybrid material. For the same reason, the method does not guarantee the total coating of the inorganic support with core-shell MOF, thereby the selective adsorption features of the hybrid material are not optimum. The second consequence is that the reaction conditions are not compatible with stability in the zeolites with low Si/AI ratio. In particular, the process causes dissolution and disappearance of said zeolite in case of MOF growth in an aqueous medium, starting from a terephthalate ligand and an aluminium salt, the conditions being nearest to the method of the present invention.

The technical problem regarding EP 2341031 A1 can be considered as obtaining an aluminosilicate-MOF hybrid material with a core-shell structure, where the shell MOF being present in a rigid structure and the core is a porous aluminosilicate with a low Si/AI ratio, capable of maintaining the selective adsorption technical features thereof. The solution provided in the present invention is a hybrid solid, the shell MOF ligands of which are covalently bonded to the aluminium atoms of said aluminosilicate, and where they become shared in an interface between both parts of the hybrid material.

### DESCRIPTION OF THE INVENTION

The present invention is an inorganic-inorganic porous hybrid material comprising a zeolite or an amorphous aluminosilicate core, having a Si/Al atomic ratio from 1 to a value lower than 2.5, and a metal-organic framework (MOF) shell formed by a bidentate organic ligand covalently bonded to the aluminium atoms of said zeolite or amorphous aluminosilicate.

In the field of the present invention, "hybrid material" is defined as that being formed by two different materials having also different structures.

The present application describes the manufacturing process of a hybrid material with no other metal source than the aluminium provided by the zeolite onto which it grows. No metallic or metal salt dispersion is introduced in the reactor where said hybrid material is formed.

Thanks to the covalent bond of the organic ligands with the inorganic core aluminium, the MOF which crystallizes is a rigid one. As it grows onto fixed positions of the zeolite core acting as the substrate, its x-ray diffractogram does not change with the adsorption/desorption or with temperature, it does not undergo breathing phenomena.

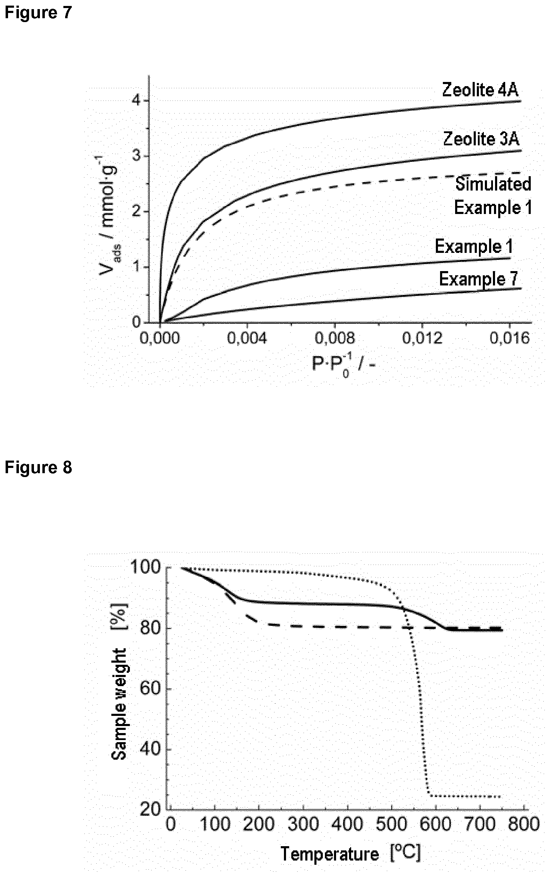

Thus, it shows higher thermal stability, 600 °C (Figure 8), as compared to MOFs in the art, for example 560 °C of that comprising aluminium and TPA being described in EP 2341031 A1.

Thanks to its core-shell conformation, the hybrid material of the invention hierarchically combines the micro- and mesoporosities of a MOF being at the outer area, featuring high compatibility with polymers and chemical functionality so as to modify its surface and adsorption properties in a versatile manner, and a low Si/AI ratio zeolite at the core, having rigid micropores being very narrow and highly useful for gas dehydration and separation.

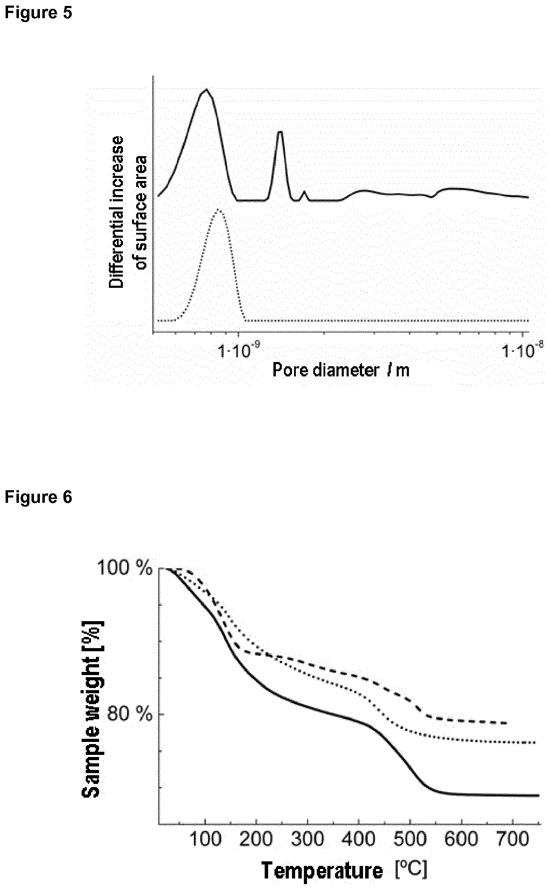

So, in a very preferable aspect, the hybrid material of the invention has a microporosity of 1 - 2 nanometres and a mesoporosity of 2 - 10 nanometres in said MOF, additional to the corresponding zeolite microporosity itself between 0.1 and 1 nanometre. The combined presence of mesopores and micropores is shown, for example, in the hybrid material obtained in the Example 4 (Figure 5).

The possible organic ligands forming the MOF are known in the art and are preferably selected from the group consisting of terephthalate, amino-terephthalate, diamino-terephthalate, bromoterephthalate, chloroterephthalate, fluoroterephthalate, iodoterephthalate, methyl-terephthalate, dimethyl-terephthalate, nitro-terephthalate, hydroxy-terephthalate, fumarate, imidazole, pyrazole, naphthalene-2,6-dicarboxylate, biphenyl-4,4'-dicarboxylate, 4,4'-bipyridine and 4,4'-hexafluoroisopropylidene-bisbenzoate.

Any of these ligands have been reported in the art as suitable for forming a MOF conformation, so including all of them as possible components of the hybrid-material MOF of the invention is a valid theoretical extension of the examples provided in the present application.

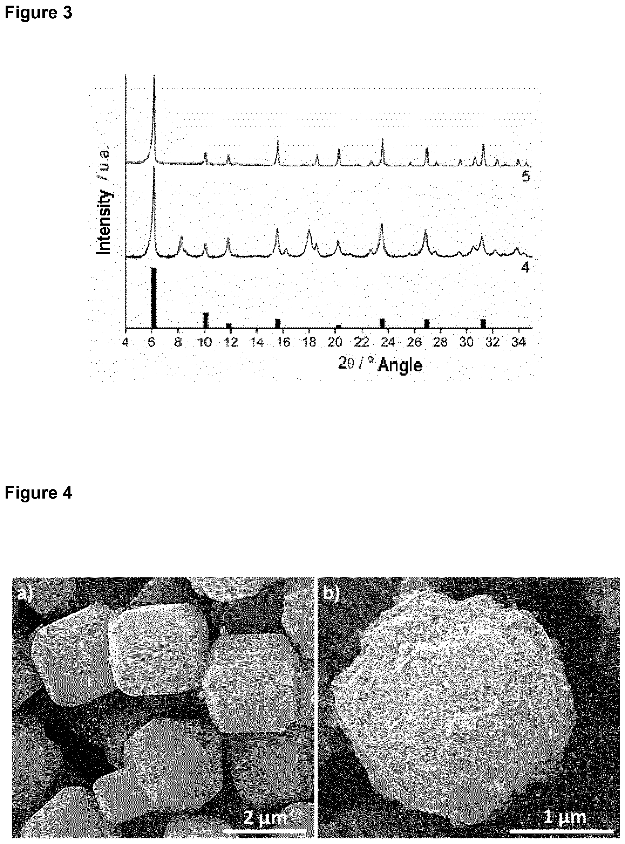

Most preferably, said ligand is terephthalate, the deprotonated form of terephthalic acid. In this case, the MOF grows onto the zeolite crystals surface having a laminar morphology on the initial flat surface of the zeolite (Figure 4b).

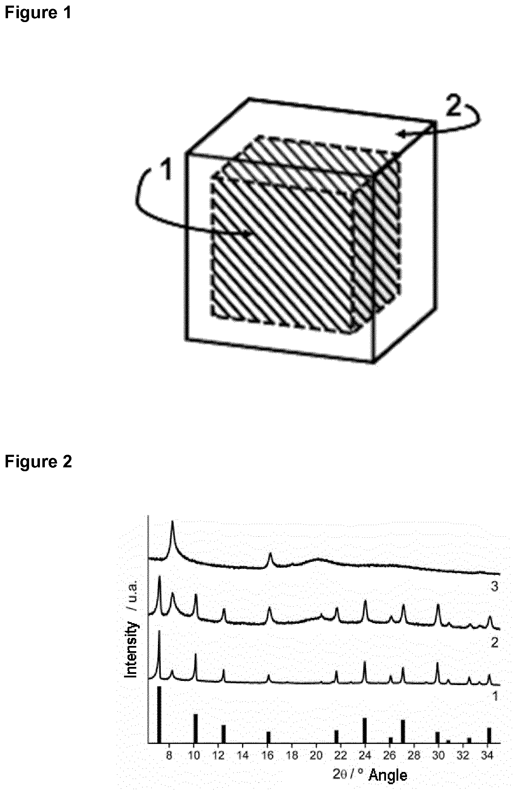

The material of the invention uses zeolites rich in aluminium, having a low Si/AI ratio, as the only metal source for porous aluminium MOF growth surrounding the crystals of said zeolite, resulting in a core-shell hybrid material. The access to the core porosity is determined by the outer MOF porosity (Figure 1). The original zeolite is a product of a hydrophilic nature and of great adsorption capacity which may or may not keep the crystallinity thereof in the final hybrid material.

The Si/AI ratio of said original zeolite is between 1 and less than 2.5. The lower limit is limited by Lowenstein rule which does not allow two adjacent aluminiums; that is, -Al-O-Al- bonds. The upper limit determines a too low aluminium concentration which does not allow anchoring of the organic ligand or MOF formation. Thus, for the same crystalline structure of the FAU type no growth of the MOF is appreciated starting from zeolite Y with a Si/Al = 2.5 ratio (Example 5), whereas from zeolite X of the same FAU type but with a Si/Al = 1-1.5 ratio, the zeolite/MOF hybrid solid of the invention is obtained (Example 4).

The occurrence of strong covalent bonds between the organic ligands and the aluminium atoms of the original zeolite being part of a rigid structure result in a novel MOF having a novel structure.

Formation of the MOF in the procedure of the invention starts from a zeolite used as a reactant and growth surface at the same time. As the medium does not contain other aluminium source than the zeolite, the metal-ligand reaction is restricted to the fixed positions of the aluminium atoms in the rigid structure of said zeolite. The MOF structure has, therefore, a crystalline system similar to the zeolite onto which it crystallizes, interatomic distances which adjust to those metal positions and related properties, such as absence of flexibility in its pores and a high aspect ratio. The crystalline system is a cubic one in the materials from LTA and FAU-type zeolites. In the interface aluminosilicate-MOF, both materials making up the hybrid share the aluminium atoms of their structures, which belong simultaneously to the MOF and the aluminosilicate.

The cell lengths of the MOF cubic crystalline system (a, b, c) of the present invention were calculated using specialized software (FullProf Suite, Institut Laue-Langevin). These lengths and the "d" spacing between MOF sheets and between aluminium atoms are related to the aluminium-aluminium distances being present in the zeolites.

The x-ray diffractogram of the shell MOF corresponds to the additional peaks appearing in the diffraction spectrum of the core zeolite (Examples 1, 2 y 4), and it is the same being shown by the MOF which is isolated from the hybrid material (Example 7). This diffractogram indicates a preferential growth of the structure in a laminar way in the planes (100) and (2 0 0), the peaks of which correspond, in the case of Examples 1 to 4, to atom spacing (d) of 1.09 and 0.55 nm (Tables 1 and 2, Figures 2 and 3). From these distances, at least 1.09 nm corresponds to the atom spacing between Al atoms.

The diffraction spectrum corresponding to MOF is:

| 2·Theta [°] | d [nm] | Plane |
|---|---|---|
| 8.07 | 1.089 | (1 0 0) |
| 16.18 | 0.548 | (2 0 0) |

with an angle variability of 0.1° and spacing variability of 0.01 nm. The spacings (d) are calculated by means of the Bragg's equation from the angles (2·Theta) of the diffractogram peaks.

Only in the samples from Examples 4 and 7 there is also observed a growth in plane (2 1 0), showing a MOF growth being perpendicular to the previous planes, corresponding to

| 2·Theta [°] | d [nm] | Plane |
|---|---|---|
| 8.07 | 1.089 | (1 0 0) |
| 16.18 | 0.548 | (2 0 0) |
| 18.11 | 0.489 | (2 1 0) |

These diffractions ((1 0 0), (2 0 0) and eventually (2 1 0)) also indicate a cubic crystalline structure similar to the zeolites onto which it grows, LTA and FAU types, extending to MOF. Both the cubic crystalline system and other properties associated to the MOF of the invention, distance of atom spacings, absence of flexibility, etc., are also retained in those hybrid materials where the zeolite core has lost its crystallinity (Example 3).

In the cases where the core keeps its crystalline structure, the spectrum will also show the peaks corresponding to the zeolite, the x-ray spectrum of which for the several types thereof are known in the art and included in the Book "Collection of Simulated XRD Powder Patterns for Zeolites" by M.M.J. Treacy and J.B. Higgins. The structures of zeolites, and in particular of the LTA and FAU types, are described by the IZA (International Zeolite Association), Ch. Baerlocher and L.B. McCusker, Database of Zeolite Structures: http://www.iza-structure.org/databases.

So, a further aspect of the present invention is a porous hybrid material having x-ray diffraction spectra containing the previous peaks, or the interatomic distances reported in the MOF.

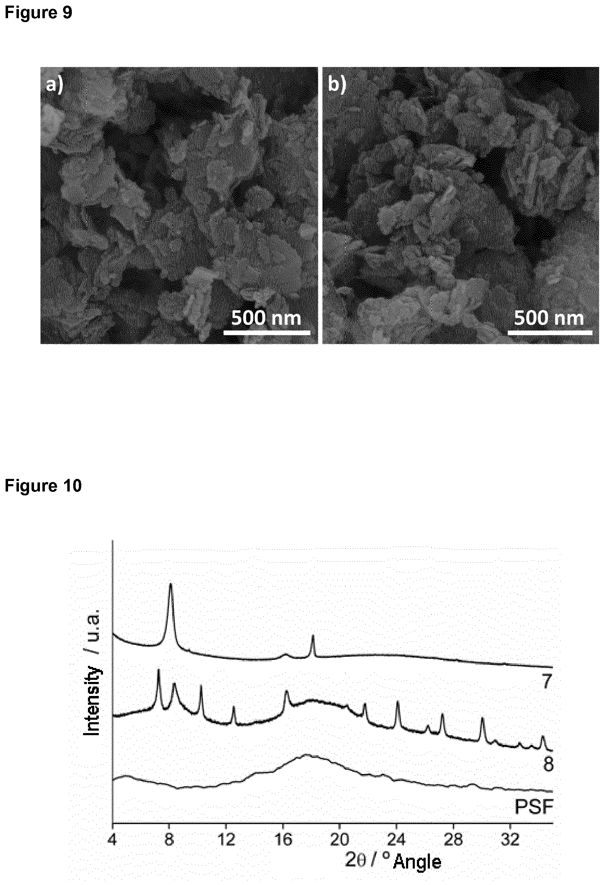

In Example 7 the metal-organic framework corresponding to shell of the porous hybrid solid of the invention is segregated and separated. The segregated material keeps the previous laminar structure and x-ray diffractogram (Figures 9 and 10, Table 2), corresponding to the same cubic structure and the same interlaminar spacings and aluminium-aluminium which it acquired during growth thereof onto the zeolite. The isolated metal-organic framework shows a thermal stability of about 560 °C, a little lower than the 600 °C at which the MOF being still bound to the zeolite core degrades. This isolated structure featuring novel properties, with a high aspect ratio, can be used separately as rigid MOF for several industrial uses.

According to this, another preferred aspect of the present invention is an isolated MOF structure having a distance between aluminium atoms of 1.09 nm, with a variability of 0.1 nm, or else having the X-ray spectrum corresponding to MOF of the hybrid material.

In every case, the AI-AI distances are unique and constant in at least two growing directions. This is new with respect to the procedures using an additional metal source. The MIL-53, for example, uses terephthalate as the ligand but it has an orthorhombic structure having unit cell lengths different in all the directions, and different aluminium-aluminium distances in each of the axes.

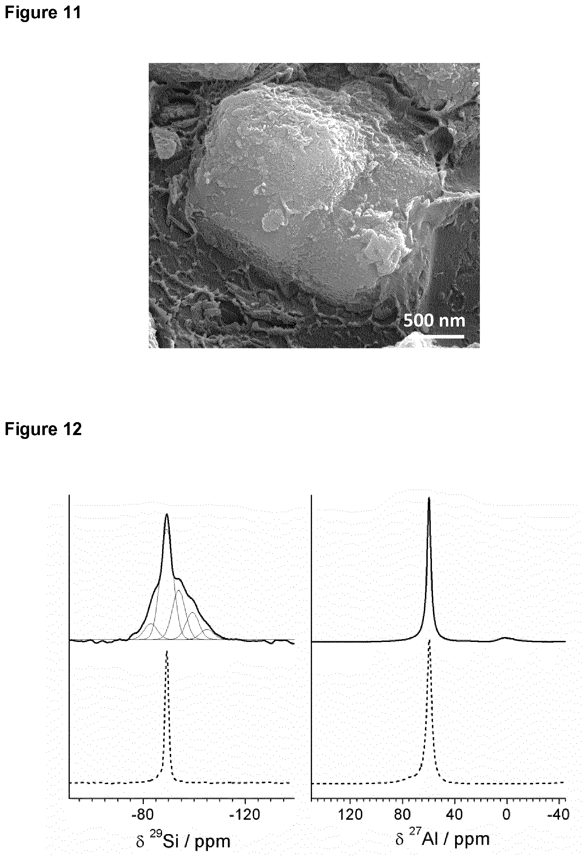

Figure 12 shows the nuclear magnetic resonance spectra for ²⁹Si and ²⁷Al of a hybrid material according to the invention as compared to those of the starting zeolite 4A. There can be observed changes in the Si-AI coordination related to the presence of the new TPA-aluminium bonds in the MOF-zeolite interface, caused by the chemical reaction of the organic ligands with the aluminium atoms of the characterizing zeolites of this invention.

The hierarchical bond of MOF and zeolite meso- and microporosities derives into an exclusive effect for the CO₂. The shell MOF excludes almost all the CO₂ and prevents it from entering into the porosity of the zeolite core (Figure 7 and Table 3). The organic MOF acts as a "gate" for the CO₂ onto the narrow-pored and rigid inorganic zeolite core, thus reducing the CO₂ surface diffusion, through all the hybrid solid and improving efficiency in the H₂/CO₂ separation. Thus, the hybrid material of Example 1 only adsorbs 1.2 mmol-g⁻¹, a 43 % of the CO₂ which would be expected according to its composition, which is 87 % w/w of zeolite and 13 % w/w of MOF (isotherm simulated Example 1).

The MOF acts, therefore, as a gate avoiding the CO₂ entering to the core zeolite, which would preferably adsorb a great amount thereof (up to 4.0 mmol-g⁻¹). The dramatic reduction in the CO₂ adsorption by the hybrid material of the invention, with respect to the starting zeolite makes it very useful in the separation of environmental impact gases, and in particular for efficient separation of the H₂/CO₂ gas mixture in the pre-combustion, within CO₂ storage and uptake strategies.

The porous hybrid material of the invention synergically improves the properties of the materials separately. There is increased the compatibility of the zeolites with the polymers thanks to a porous MOF coating based on the zeolite metal. The organic nature of the MOF avoids formation of empty gaps being non-selective to the entry of gases when used as fillers in mixed membranes (Fig. 11). These gaps are usual when adding pure zeolites to polymers.

In the process for obtaining a hybrid material according to the invention, a MOF crystallizes in an aqueous medium being coated and anchored to a zeolite, from the aluminium containing said zeolite. There is no need of any additional metal source for MOF formation.

Thus, a further preferred aspect is the process for obtaining the porous hybrid material of the invention, comprising reacting a bidentate organic ligand in the presence of a zeolite in aqueous dispersion, at a temperature from 0° to 80° C, preferably from 15° to 40° C, during 1 to 28 days, preferably from 2 to 7 days, wherein said aqueous dispersion has a Al zeolite / ligand molar ratio from 1 to 4 for obtaining a hybrid with a zeolite core, or a Al zeolite / ligand molar ratio from 0.50 to a value lower than 1 for obtaining an amorphous aluminosilicate core, wherein said porous aluminosilicate or said zeolite have a Si/AI ratio from 1 to a value lower than 2.5, for obtaining an inactive hybrid material and free organic ligand; followed by separation and activation of said inactive hybrid material.

The reaction temperature is limited by the minimum necessary to prevent water from freezing, and the maximum is delimited by the solubility increase of the organic ligand and the total digestion of the zeolite, which would result in a material being different to that of the invention.

The lowest value of the Al / ligand ratio corresponds to the hybrid material having an aluminosilicate core where the entire amorphization of zeolite (Example 3). Values from 1 to 4 result in a zeolite-MOF hybrid material. The upper limit is determined by no MOF formation.

A highly preferred aspect of the invention is that said starting zeolite is a zeolite A of the LTA type, or a zeolite X.

This procedure can include a step for washing the inactive hybrid material after separation of the inactive hybrid material, or the addition of a solvent before said separation so as to obtain the same washing effect. The washing solvent may be any organic polar solvent being water miscible, preferably DMF, DMSO, DMAc, etc.

Said separation may be a mechanical separation of a solid in dissolution, habitually by decantation or filtration.

The process may also include drying the hybrid material obtained at the evaporation temperature of the least volatile solvent being used.

In the scope of the present application, the expression "inactive hybrid material" refers to the material of the invention having the newly formed MOF pores covered by the ligand being deposited therein unreacted, and thus being inactive or partially inactive regarding the functionality thereof.

Said activation preferably occurs by solvothermal dissolution or by thermal decomposition of the free organic ligand.

In the scope of the present application, the expression "solvothermal dissolution" refers to a wash typically during 72 h at a temperature from 25 and 150 °C with a solvent which solubilizes the ligand which is present in the pores.

In the scope of the present application, the expression "thermal decomposition" refers to removal of the unreacted ligand onto the hybrid surface, subjecting the inactive hybrid product to a temperature at about 250 °C to 400 °C during a period of time of habitually 72 h.

The zeolite results in the organic ligand deprotonization on the surface thereof in an aqueous medium and at room temperature. Its rear bond to the zeolite aluminium is produced in one single step, creating a MOF coating with high organic content around it.

Thus, the MOF grows in the process of the invention by adding only an organic ligand to zeolite aqueous dispersion. This process avoids the need of any additional source of aluminium, such as aluminium salts, alumina or metal aluminium, or of a strong deprotonating agent for MOF crystallization. Thus, it is avoided the presence of compensation ions, such as nitrates, chlorides or sulphates in the medium. Zeolite crystals act simultaneously as reactant, by providing the source of aluminium, and as substrate, enhancing heterogeneous nucleation in MOF growth. The synthesis method is realized in an aqueous medium by restricting the use of organic solvents to a washing step.

There is a dependence of the quantity of MOF formed in the hybrid material of the invention on the Al / ligand ratio that the reaction medium has. Higher MOF ratios are obtained as compared to zeolite having lower Al / ligand molar ratios (Examples 1 and 2, with 13 and 25 % w/w of MOF, from 4 to 2 moles of aluminium per mole of organic ligand, respectively). Nevertheless, if said molar ratio is lower than 1, the zeolite core loses crystallinity and remains in the hybrid as an amorphous aluminosilicate (Example 3). Al / ligand ratios being higher than 4, do not result in MOF growth onto zeolite. Zeolite or ligand concentration in the medium does not have a decisive influence on the process and it is kept constant in the Examples (water / ligand molar ratio = 200).

These reaction conditions that maintain a slightly acid organic ligand insoluble in water at a low temperature, also maintain crystallinity of a zeolite rich in aluminium in the reaction medium.

In the procedures of the art, however, it is required the addition of a strong base or a metal aluminium source of an acidic nature, or high temperatures, since the organic ligands are not very much soluble in an aqueous medium. These conditions are not compatible with the low stability of zeolites with high aluminium content. The absence of a strong deprotonating agent or of an additional aluminium source supposes a definite technological advantage of the procedure of the invention with respect to the art.

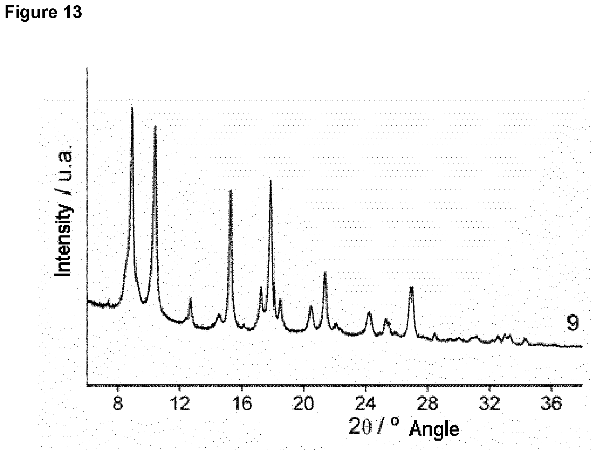

Example 9 shows the manufacturing process of a hybrid having an aluminium-TPA MOF and zeolite A in an aqueous medium using an aluminium source in the form of a metal salt, following the conditions of procedures described in the art. The zeolite is incompatible with the reaction medium. Hydrolysis of the Al³⁺ cation results in acidity which dissolves the material with a Si/Al=1 ratio. Thus, it is shown the incompatibility of zeolite A (LTA type) with crystallization processes of MOFs using additional aluminium salt sources. Figure 13 shows the X-ray spectrum of the obtained material, which can be matched with the spectrum of the MOF with the composition AI(BDC)(OH) from the state of the art. This MOF does show structural variation phenomena with temperature, the use of which in combination with zeolites would be unadvised in polymer composites.

Example 8 describes a polymer with addition of the hybrid material of the invention as fillers, for application thereof in separation membranes. Polymers with fillers are known as mixed matrix membranes. In this case, the MOF shell improves compatibility with the polymer due to its organic nature, avoiding the formation of empty volumes in the final polymer composite. Furthermore, improved adherence between the inorganic core and the shell MOF avoids the formation of defects or gaps in the membrane in processes with temperature changes caused by MOF flexibility. Consequently, the hybrid material of the invention improves compatibility of zeolite with polymers.

Another aspect of the invention is to combine the isolated MOF (Example 7) with a polymer like those described in WO 2011081779 A2, preferably at a percentage of 5 to 50 % w/w.

In the case of the hybrid material from Example 3, where the low aluminium / ligand ratio in the synthesis implies the entire amorphization of the zeolite crystalline core, the resulting hybrid keeps a high compatibility with polymers thanks to the metal-organic surface nature thereof, as well as being also indicated for stream dehydration processes or selective adsorption.

Another preferred aspect of the invention is the use of hybrid material in processes of dehydration, separation or selective adsorption of gases or liquids. These processes use polymer composites or mixed matrix membranes, in such a way that a further preferred aspect is that the hybrid material of the invention is being part of said mixed matrix membrane or polymer composite.

A further preferred aspect is the use of the hybrid material of the invention as a catalyst, in a catalytic process.

A further preferred aspect is the use of the MOF of the invention as desiccant, as a catalyst, as a filler in mixed membranes or a polymer composite.

The following Examples describe zeolite/MOF hybrid solids starting from the zeolite phases of greater importance in the art, which are zeolite A of the LTA type (example 1 and 2) and zeolites X and Y of the FAU type (Example 4), with different metal compensation cations.

### BRIEF DESCRIPTION OF THE FIGURES

**Figure 1** is an explicative scheme of the porous hybrid material of the invention. (1): inorganic core of zeolite or inorganic aluminosilicate containing aluminium. (2): a MOF based on aluminium surrounding the core, wherein the metal atoms of the interface belong at the same time to both structures.
**Figure 2** is a graph of the intensity in random units against the diffraction angle 2θ in grades, showing the X-ray diffraction spectra (source of Cu Kα1, λ=0.15406 nm) of the powdered hybrid materials prepared in Examples 1, 2 and 3 (curves 1, 2 and 3 respectively). The bars show simulated diffractions of a zeolite of the TPA type, by way of comparison.
**Figure 3** is a graph of the intensity in random units against the diffraction angle 2θ in grades, showing the X-ray diffraction spectra (source of Cu Kα1, λ=0.15406 nm) of the powdered hybrid materials prepared in Examples 4 and 5 (curves 4 and 5 respectively). The bars show simulated diffractions of a zeolite of the FAU type, by way of comparison.
**Figure 4a** is a scanning electron microscope image of a powdered zeolite of the commercially standard sodium LTA type (Z4A, IQE); **Figure 4b** is scanning electron microscope image of the powdered porous hybrid solid prepared according to the Example 1.
**Figure 5** shows the pore size distribution (PSD) of the hybrid material prepared according to the Example 4 and the commercial zeolite X (ZEOCHEM® 13X, Si/AI = 1-1.5 ratio, FAU type), calculated with the differential increase of the surface area in nitrogen adsorption at 77 K against the pore diameter. The solid line corresponds to Example 4. The dotted line corresponds to zeolite X.
**Figure 6** is a graph of the mass variation against temperature of the hybrid materials manufactured under the conditions of the Example 6, in the range of 25 to 750 °C in air atmosphere. The dotted line corresponds to fumaric acid, the solid line to aminoterephthalic acid and the broken line to biphenyldicarboxylic acid.
**Figure 7** is a graph of the quantity of carbon dioxide being adsorbed in mmol/g under isothermal conditions at 25 °C, based on the relative pressure of carbon dioxide, expressed as the ratio to the vapour pressure at that temperature, of the hybrid material of Example 1, the MOF structure from Example 7 and the commercial zeolites 3A (Z3A, IQE) and 4A (Z4A, IQE). The isotherm "Simulated Example 1" is obtained as a linear combination of isotherms of zeolite 3A and the MOF from Example 7, at a ratio of 87/13 % w/w.
**Figure 8** is a graph of the mass variation against temperature of the hybrid material manufactured under the conditions of the Example 1, the MOF from Example 7 and the zeolite K/Na-LTA (Z3A, IQE) in the range of 25 to 750 °C in air atmosphere. The solid line corresponds to Example 1. The dotted line corresponds to Example 7. The broke line corresponds to Zeolite 3A (Z3A, IQE).
**Figure 9** is a scanning electron microscope image of the laminar MOF growing as the shell in the hybrid material of this invention, segregated and separated as it is described in the Example 7.
**Figure 10** is a graph of the intensity in random units against the diffraction angle 2θ in grades, showing the X-ray diffraction spectra (source of Cu Kα1, λ=0.15406 nm) of the composite prepared according to Example 8, powdered MOF prepared according to Example 7 and that corresponding to commercial polysulphone Udel® 3500, by way of comparison (curves 8, 7 and PSF, respectively).
**Figure 11** **a** scanning electron microscope image of a polymer composite formed by the zeolite/MOF hybrid material of the invention and commercial polysulphone Udel® 3500, at the same percentage of 50 % w/w, manufactured according to the Example 8.
**Figure 12** is a graph of the chemical shift of isotopes ²⁹Si and ²⁷Al obtained by means of nuclear magnetic resonance (NMR) with cross polarization and magic angle dispersion for the zeolite 4A (Z4A, IQE) materials and the hybrid material of the invention according to the Example 2, from which it shows the spectrum deconvolution of ²⁹Si. The broken line corresponds to zeolite 4A; the solid line corresponds to the hybrid material of the invention.
**Figure 13** is a graph of the intensity in random units against the diffraction angle 2θ in grades, showing the X-ray diffraction spectra (source of Cu Kα1, λ=0.15406 nm) of the material manufactured according to Example 9 (curve 9).

### EXAMPLES

In order to show the present invention in an illustrative manner, although not in a limiting manner, the following examples are provided.

### Example 1: Synthesis of potassium zeolite LTA/MOF hybrid material

0.5 g of terephthalic acid were dispersed (TPA, Sigma Aldrich, 98 % purity) as organic ligand in 10 mL of distilled water and it was stirred for 10 min. Then 2.1 g of commercial zeolite 3A were added (Z3A IQE, K/Na-LTA, 38 % K, Si/AI = 1 ratio) to the organic ligand water dispersion and it was stirred during seven days at room temperature. The reaction mixture approximately had the following molar composition: 4 Al : 1 TPA : 200 H₂O. The solid product obtained was filtered and washed with distilled water and dimethylformamide (DMF) and it was dried at 200 °C for 24 h. The solid powdered product obtained was calcined at 330 °C for 72 h.

The product obtained shows a MOF shell with 13 % w/w to 87 % w/w of the zeolite core (Figure 8), due to high Al / ligand molar ratio of the reaction, with a value of 4. Table 1 and Figure 2 show the X-ray diffractogram keeping the peaks from the LTA type of zeolite together with the MOF diffraction peaks. Using electronic microscopy a rough MOF shell can be seen onto the flat surface of the initial zeolite crystal (Figure 4). The hybrid product adsorbs a much lower quantity of CO₂ (Figure 7 and Table 3) than what could be expected because of its composition, thanks to the effect of the MOF shell. The pores hierarchy (Figure 5) of the hybrid material reduces adsorption of CO₂ in the core zeolite when it is coated with a MOF shell featuring low surface adsorption of this gas.

### Example 2: Synthesis of sodium zeolite LTA/MOF hybrid material

2.4 g of commercial zeolite 4A (Z4A IQE, Na-LTA, Si/AI = 1 ratio) were dispersed in 25 mL of distilled water, and were stirred for 10 min. Then, 1.1 g of TPA were added to the zeolite aqueous dispersion and stirred for 72 h at 40 °C. The reaction mixture had approximately the following molar composition: 2 Al : 1 TPA: 200 H₂O. The solid product obtained was filtered and washed with distilled water and dimethyl sulfoxide (DMSO) and dried at 200 °C for 24 h.

The starting zeolite was modified with respect to Example 1 with sodium as the compensation cation, the mixing order, the temperature and the reaction time. The solid hybrid product obtained had a higher MOF percentage than Example 1, approximately 25 % w/w of MOF and 75 % w/w of zeolite, due to the lower aluminium/ligand molar ratio (2:1). The X-ray spectrum is shown in Figure 2. The NMR spectra of the hybrid material of this Example, together with those of zeolite 4A by way of comparison (Figure 12), show that part of the silicon and aluminium atoms of the zeolite core are affected due to creation of organic ligand-aluminium bonds at the zeolite-MOF interface of the hybrid material.

### Example 3: Synthesis of aluminosilicate/MOF hybrid material

0.8 g of commercial zeolite 4A (Z4A IQE, Na-LTA, Si/AI = 1 ratio) were dispersed in 18 mL of distilled water and stirred for 10 min. Then, 0.9 g of TPA was added to the zeolite aqueous dispersion and it was stirred for 72 h at 40 °C. The reaction mixture had approximately the following molar composition: 0.75 Al : 1 TPA : 180 H₂O. The solid product obtained was filtered and washed with distilled water and DMF and it was dried at 200 °C for 24 h. The too low aluminium/ligand molar ratio (0.75) results in the total amorphization of the core, which is no longer zeolite but aluminosilicate.

The shell MOF supposes about 30 % w/w in the final solid. The X-ray diffraction spectrum is shown in Figure 2. Although now the core has lost the crystallinity thereof and becomes an amorphous aluminosilicate, the hybrid material keeps its shell-core conformation and the shell MOF remains anchored to the aluminium atoms of the inorganic core, and keeps the properties described above, depending on the starting zeolite onto which it grows; namely, an X-ray diffraction spectrum being different to other MOFs in the art with this composition, a cubic crystalline system having unique cell lengths and inter-metal spacings about 1.09 and 0.55 nm and laminar morphology.

### Example 4: Synthesis of sodium zeolite FAU X/MOF hybrid material

2.1 g of zeolite X (ZEOCHEM® 13X, Si/AI = 1-1.5 ratio) were dispersed in 20 mL of distilled water and stirred for 10 min. Then, 0.9 g of TPA were added to the zeolite aqueous dispersion and stirred for 72 h at room temperature. The reaction mixture had approximately the following molar composition: 2 Al : 1 TPA: 200 H₂O. The solid product obtained was filtered and washed with distilled water and DMF and dried at 200 °C for 24 h. The solid product obtained was calcined at 330 °C for 72 h.

The porous hybrid material of the invention was manufactured, starting in this case from a less dense zeolite of the FAU type, with a Si/AI ratio of 1-1.5, higher than those from Examples 1 and 3, but keeping the aluminium/ligand molar ratio of Example 2 in the reaction (2:1). Zeolite 13X has a FAU type structure with Si/AI low ratio. The high concentration of aluminium and the AI-AI distances similar to those of the LTA type, promote the surface crystallization of the MOF of the invention. Table 1 and Figure 3 show the X-ray diffraction peaks of the MOF (in italics and highlighted), together with those of the FAU type from the zeolite core.

The X-ray diffraction spectra of the zeolite/MOF hybrid materials obtained in the Example 1 (from the LTA type zeolite, columns 1 to 3) and Example 4 (from the FAU type zeolite, columns 4 to 6), show the peaks of Table 1. Their relative intensity (I/I₀) is calculated from the peak with the maximum intensity, which is given the value 100: strong (F>85), semi-strong (60<SF<85), medium (40<M<60), semi-weak (15<SD<40), weak (D<15). The peaks in italics correspond to the shell MOF diffraction present in the hybrid solid.

**Table 1**

| 2·Theta [°] | d [nm] | I/I₀ | 2·Theta [°] | d [nm] | I/I₀ |
|---|---|---|---|---|---|
| 7.18 | 1.231 | F | 6.18 | 1.428 | F |
| ***8.07*** | ***1.089*** | ***D*** | ***8.07*** | ***1.089*** | ***M*** |
| 10.16 | 0.870 | M | 10.11 | 0.873 | M |
| 12.45 | 0.710 | SD | 11.86 | 0.745 | M |
| 16.09 | 0.550 | SD | 15.60 | 0.566 | SF |
| ***16.18*** | ***0.548*** | ***D*** | ***16.18*** | ***0.548*** | ***M*** |
| ***18.11*** | ***0.489*** | ***D*** | ***18.11*** | ***0.489*** | ***SF*** |
| 21.65 | 0.410 | SD | 20.29 | 0.435 | M |
| 23.97 | 0.371 | M | 23.57 | 0.375 | SF |
| 26.09 | 0.341 | D | 26.95 | 0.328 | SF |
| 27.09 | 0.329 | M | 31.29 | 0.282 | M |
| 29.92 | 0.298 | SD | | | |
| 30.80 | 0.290 | D | | | |
| 32.52 | 0.275 | D | | | |
| 34.15 | 0.262 | SD | | | |

| | | | | | |
|---|---|---|---|---|---|
| • Tolerances de ± 0.1° and ± 0.01 nm. • Diffractogram obtained with radiation source Cu Kα1 (λ=0.15406 nm). | | | | | |

The hybrid material obtained shows a pore distribution consisting of those of the FAU type zeolite (0.8 nm) and the MOF, with micropores of 1.4 nm and mesopores corresponding to the spacing between the sheets of material (Figure 5). It shows hierarchical micro- and mesoporosity derived from the shell-core composition thereof.

### Comparative

### Example 5: Synthesis of sodium zeolite FAU Y/MOF hybrid material

1.8 g of zeolite Y (Zeolyst International CBV100, Si/AI = 2.5 ratio) were dispersed in 10 mL of distilled water and stirred for 10 min. Then, 0.5 g of TPA were added to the zeolite aqueous dispersion and stirred for seven days at 40 °C.

The reaction mixture had approximately the following molar composition: 2 Al : 1 TPA : 200 H₂O. The solid product obtained was filtered and washed with distilled water and DMSO and dried at 200 °C for 24 h.

With the same aluminium/ligand ratio and starting from a FAU type zeolite, as in Example 4, and even with higher reaction times and temperature, organic ligands could not be reacted with the aluminium atoms of the zeolite and therefore the porous hybrid solid could not be obtained. This is due to the Si/AI ratio of the starting zeolite which implies a too low concentration of aluminium atoms, which are to be separated by interatomic distances which do not allow anchoring the organic ligand to the aluminium-aluminium distances being described. A Si/AI ratio of 2.5 can be considered as the upper threshold of the range for the initial zeolite from the process of the invention.

### Example 6: Synthesis of sodium zeolite LTA/MOF hybrid material

1.0 g of zeolite 4A (Z4A IQE, Na-LTA, Si/AI = 1 ratio) were dispersed in 10 mL of distilled water and stirred for 10 min. Then, 0.5 g of 2-aminoterephthalic acid (C₈H₇NO₄, 99 % purity, Sigma Aldrich), 0.32 g of fumaric acid (C₄H₄O₄, 99 % purity, Sigma Aldrich) and 0.68 g of biphenyl-4,4'-dicarboxylic acid (C₁₄H₁₀O₄, 97 % purity, Sigma Aldrich) were added to the zeolite aqueous dispersion, and stirred for seven days at 40 °C. The reaction mixture had approximately the following molar composition: 2 Al : 1 ligand : 200 H₂O. The solid product obtained was filtered and washed with distilled water and dimethylformamide (DMF), and dried at 200 °C for 24 h.

Different porous hybrid solid materials were obtained based on the three different bidentate organic ligands: fumarate, 2-aminoterephthalate and biphenyl-4,4'-dicarboxylate. The different solubilities of the ligands in aqueous phase result in different degrees of growth of the MOF structure. A 10 % w/w, 19 % w/w and 6 % w/w of MOF is estimated, respectively, in the hybrid materials from the thermal degradation curves which are shown in Figure 6.

### Example 7: Disaggregation and separation of MOF

A quantity of 2.5 g of porous hybrid material manufactured under the conditions from Examples 1 to 4 was subjected to milling and dispersed in 200 mL of distilled water by ultrasound. The suspension obtained was allowed to settle for 5 min and the turbid supernatant was collected, which was re-dispersed in the same volume of distilled water.

This action was repeated at least 3 times with the same starting supernatant. The solid collected was then separated by centrifugation, and it was washed with more distilled water and DMF. The solid product was dried at 105 °C for 24 h and calcined at 330 °C for 72 h.

The product purified under these conditions only had the X-ray diffraction peaks corresponding to the MOF, as it is shown in Figure 10 and in Table 2. Figures 4 and 9 of electron microscopy show the morphology of the shell MOF of the invention, being laminar and with a high aspect ratio. Once separated, this MOF, with features being inherent to its growth onto zeolite, is specially indicated for applications such as polymer fillers due to the improved organic-organic interaction and high aspect ratio thereof.

Table 2 shows the crystallographic properties of the disaggregated MOF structure. These correspond to a cubic crystalline system similar to the zeolite onto which it has grown, with preferential laminar growth and a novel X-ray diffraction pattern regarding the cell and spacings, and different to the MOFs in the art having this composition.

**Table 2**

| Unit Cell | | Planes | 2·Theta [°] | d [nm] |
|---|---|---|---|---|
| **a** | 1.094 nm | **(1 0 0)** | 8.07 | 1.089 |
| **b** | 1.094 nm | **(2 0 0)** | 16.18 | 0.548 |
| **c** | 1.094 nm | **(2 1 0)** | 18.11 | 0.489 |
| **α = β = γ** | 90° | | | |
| **Volume** | 1.3111 nm³ | | | |

| | | | | |
|---|---|---|---|---|
| • Tolerances of ± 0.1° and ± 0.01 nm. • Diffractogram obtained with radiation source Cu Kα1 (λ=0.15406 nm). | | | | |

Table 3 and Figure 7 show low CO₂ adsorption by the disaggregated MOF (0.61 mmol·g⁻¹), which derives in a reduction of the CO₂ adsorption in the shell-core material of the invention. Thermal stability of the disaggregated MOF is shown in Figure 8, being a bit lower than that of the MOF which is part of the shell of the hybrid material of the invention when it is anchored to the zeolite rigid core.

Table 3 shows the CO₂ amount being adsorbed at 25 °C and a relative pressure P/P₀ = 0.016 and the specific surface area calculated by adjusting the isotherms (Figure 7) to the Langmuir isotherms by the several materials manufactured according to the descriptions of the Examples. The isotherm "simulated Example 1" is obtained as a linear combination of the isotherms of the zeolite 3A and the disaggregated MOF at a ratio of 87/13 % w/w.

**Table 3**

| | V_{CO2,ads} a P/P₀ = 0.016 [mmol·g⁻¹] | S_{esp,CO2} Langmuir isotherm [m²·g⁻¹] |
|---|---|---|
| **zeolite 4A (IQE)** | 3.99 | 403 |
| z**eolite 3A (IQE)** | 3.10 | 343 |
| **Example 7** | 0.61 | 105 |
| **Example 1** | 1.16 | 197 |
| **Simulated Example 1** | 2.69 | 312 |

### Example 8: Polymer composite - zeolite/MOF hybrid

0.2 g of powdered hybrid material obtained according to the Example 2 with 0.2 g of solid commercial polysulphone pellet (PSF, Udel® 3500) were mixed. This mixture was added to 3.6 g of chloroform (CHCl₃) and was stirred for 24h at room temperature so as to obtain the entire dissolution of the PSF. At least 3 periods of 15 min of ultrasound dispersion were interspersed. Then, the dispersion was poured onto a 13 cm diameter Steriplan® Petri dish, and it was allowed to dry for 48 h being partially covered. The obtained composite was treated under vacuum and at 120 °C for 24 h for obtaining a flat sheet of composite of about 50 and 150 µm of thickness.

Figure 10 shows the X-ray diffraction spectrum of the composite, with the crystalline peaks of the zeolite/MOF hybrid material (50 % w/w) on the amorphous bottom of the polymer, The morphology, aspect ratio and mainly organic nature of the shell MOF of the hybrid material of the invention, manufactured according to Example 2, improves adherence and compatibility of the zeolite core with the polymer in the composite, as it can be observed in Figure 11, avoiding the formation of empty spaces being non-selective in mixture separation.

### Comparative

### Example 9: Hybrid material with an additional metal source in aqueous medium

0.70 g of Al(NO₃)₃·9H₂O were dissolved in 4 mL of distilled water as metal precursor dissolution. 0.80 g of commercial zeolite 4A (Z4A IQE, Na-LTA, Si/AI = 1 ratio) were added to the previous dissolution so as to soak it with the metal precursor. At this point, zeolite 4A was dissolved due to the acidity produced by hydrolysis of aluminium. The metal precursor dissolution was dried at 80 °C. Then, 0.12 g of TPA were dispersed in 12 mL of distilled water (organic ligand dispersion) adding then the dried product obtained from the metal precursor dissolution to the organic ligand dispersion. The mixture was reacted at 100 °C for 24 h. The solid product being obtained was filtered and washed with distilled water and dimethylformamide (DMF) and it was dried at 200 °C for 24 h.

## Claims

1. Inorganic-organic porous hybrid material, comprising a zeolite or an amorphous aluminosilicate core having a Si/AI atom ratio from 1 to a value lower than 2.5, and a metal-organic framework shell formed by a bidentate organic ligand covalently bound to the aluminium atoms of said zeolite or amorphous aluminosilicate.

2. An inorganic-organic porous hybrid material according to claim 1, **characterized in that** said core zeolite is a LTA type zeolite A or a FAU type zeolite X.

3. An inorganic-organic porous hybrid material according to claims 1 or 2, **characterized in that** said bidentate organic ligand is selected from the group consisting of terephthalate, amino-terephthalate, diamino-terephthalate, bromoterephthalate, chloroterephthalate, fluoroterephthalate, iodoterephthalate, methyl-terephthalate, dimethyl-terephthalate, nitro-terephthalate, hydroxy-terephthalate, fumarate, imidazole, pyrazole, naphthalene-2,6-dicarboxylate, biphenyl-4,4'-dicarboxylate, 4,4'-bipyridine and 4,4'-hexafluoroisopropylidene-bisbenzoate.

4. An inorganic-organic porous hybrid material according to claim 3, **characterized in that** said organic ligand is terephthalate.

5. An inorganic-organic porous hybrid material according to any one of claims 1 to 4, **characterized in that** said core is a zeolite,
and **in that** said hybrid material has a microporosity of 1 - 2 nanometres and a mesoporosity of 2 - 10 nanometres in said metal-organic framework, additional to the zeolite microporosity ranging between 0.1 - 1 nanometres.

6. An inorganic-organic porous hybrid material according to any one of claims 1 to 5, **characterized in that** said hybrid material has an X-ray diffraction spectrum comprising the following peaks corresponding to the metal-organic framework:
| **2·Theta [°]** | **Plane** |
|---|---|
| 8.07 | (1 0 0) |
| 16.18 | (2 0 0) |
with an angle variability of ±0.1°, obtained with a radiation source Cu Kα1, λ=0.15406 nm.

7. An inorganic-organic porous hybrid material according to claim 6, **characterized in that** said X-ray diffraction spectrum comprises the following peaks corresponding to the metal-organic framework:
| **2·Theta [°]** | **Plane** |
|---|---|
| 8.07 | (1 0 0) |
| 16.18 | (2 0 0) |
| 18.11 | (2 1 0) |
with an angle variability of ±0.1°, obtained with a radiation source Cu Kα1, λ=0.15406 nm.

8. Isolated metal-organic framework structure, consisting of the metal-organic framework structure shell which has been segregated and separated from the inorganic-organic porous hybrid material of claim 1, **characterized in that** said metal-organic framework structure has distances between aluminium atoms of 1.09 ± 0.01 nm.

9. Process for obtaining an inorganic-organic porous hybrid material including a zeolite or an amorphous aluminosilicate core and a laminar metal-organic framework shell, comprising:
- reacting a bidentate organic ligand in the presence of an aqueous dispersion zeolite at a temperature from 0° to 80° C for 1 to 28 days, wherein said aqueous dispersion has an Al / ligand molar ratio from 0.5 to 4, and wherein said zeolite has a Si/AI ratio from 1 to a value lower than 2.5, for the obtention of an inactive hybrid material and free organic ligand;
- separating and activating said inactive hybrid material for the obtention of the inorganic-organic porous hybrid material,
wherein said zeolite is the only source of metal of the metal-organic framework, and said metal is aluminium.

10. A process according to claim 9, **characterized in that** said temperature is from 15° to 40° C.

11. A process according to claim 9 or 10, **characterized in that** said reaction takes place in a period from 2 to 7 days.

12. A procedure according to any one of claims 9 to 11, **characterized in that** said activation is performed by solvothermal dissolution or by thermal decomposition of said free organic ligand.

13. Use of the inorganic-organic porous hybrid material of any one of claims 1 to 7, in a process of dehydration, separation or selective adsorption of gases or liquids.

14. Use according to claim 13, **characterized in that** said inorganic-organic porous hybrid material is a component of a polymer composite or of a mixed matrix membrane.

15. Use of the inorganic-organic porous hybrid material of any one of claims 1 to 7, in a catalytic process.

16. Use of the metal-organic framework shell of claim 8, in a desiccant process or in a catalytic process.

## Patentansprüche

1. Anorganisch-organisches poröses Hybridmaterial, umfassend einen Zeolith- oder amorphen Aluminosilikat-Kern, der ein Si/Al-Atomverhältnis von 1 bis zu einem Wert kleiner als 2,5 aufweist, und eine metallorganische Gerüsthülle, die durch einen zweizähnigen organischen Liganden gebildet wird, der kovalent an die Aluminiumatome des Zeoliths oder des amorphen Aluminosilikats gebunden ist.

2. Anorganisch-organisches poröses Hybridmaterial gemäß Anspruch 1, **dadurch gekennzeichnet, dass** der Kernzeolith ein Zeolith A vom Typ LTA oder ein Zeolith X vom Typ FAU ist.

3. Anorganisch-organisches poröses Hybridmaterial gemäß Anspruch 1 oder 2, **dadurch gekennzeichnet, dass** der zweizähnige organische Ligand aus der Gruppe bestehend aus Terephthalat, Aminoterephthalat, Diaminoterephthalat, Bromterephthalat, Chlorterephthalat, Fluorterephthalat, Iodterephthalat, Methylterephthalat, Dimethylterephthalat, Nitroterephthalat, Hydroxyterephthalat, Fumarat, Imidazol, Pyrazol, Naphthalin-2,6-dicarboxylat, Biphenyl-4,4'-dicarboxylat, 4,4'-Bipyridin und 4,4'-Hexafluorisopropylidenbisbenzoat ausgewählt ist.

4. Anorganisch-organisches poröses Hybridmaterial gemäß Anspruch 3, **dadurch gekennzeichnet, dass** der organische Ligand Terephthalat ist.

5. Anorganisch-organisches poröses Hybridmaterial gemäß einem der Ansprüche 1 bis 4, **dadurch gekennzeichnet, dass** der Kern ein Zeolith ist,
und dass das Hybridmaterial eine Mikroporosität von 1 - 2 Nanometer und eine Mesoporosität von 2 - 10 Nanometer in dem metallorganischen Gerüst aufweist, zusätzlich zu der Mikroporosität des Zeoliths, die zwischen 0,1 - 1 Nanometer liegt.

6. Anorganisch-organisches poröses Hybridmaterial gemäß einem der Ansprüche 1 bis 5, **dadurch gekennzeichnet, dass** das Hybridmaterial ein Röntgenbeugungsspektrum aufweist, das folgende Peaks umfasst, die dem metallorganischen Gerüst entsprechen:
| **2·Theta [°]** | **Ebene** |
|---|---|
| 8,07 | (1 0 0) |
| 16,18 | (2 0 0) |
mit einer Winkelvariabilität von ±0,1 °, erhalten mit einer Strahlungsquelle Cu Ka1, λ=0,15406 nm.

7. Anorganisch-organisches poröses Hybridmaterial gemäß Anspruch 6, **dadurch gekennzeichnet, dass** das Röntgenbeugungsspektrum folgende Peaks umfasst, die dem metallorganischen Gerüst entsprechen:
| **2·Theta [°]** | **Ebene** |
|---|---|
| 8,07 | (1 0 0) |
| 16,18 | (2 0 0) |
| 18,11 | (2 1 0) |
mit einer Winkelvariabilität von ±0,1 °, erhalten mit einer Strahlungsquelle Cu Ka1, λ=0,15406 nm.

8. Isolierte metallorganische Gerüststruktur, bestehend aus der metallorganischen Gerüststrukturhülle, die von dem anorganisch-organischen porösen Hybridmaterial gemäß Anspruch 1 abgesondert und getrennt worden ist, **dadurch gekennzeichnet, dass** die metallorganische Gerüststruktur Abstände zwischen Aluminiumatomen von 1,09 ± 0,01 nm aufweist.

9. Verfahren zum Erhalten eines anorganisch-organischen porösen Hybridmaterials, das einen Zeolith- oder einen amorphen Aluminosilikat-Kern und eine laminare metallorganische Gerüsthülle einschließt, Folgendes umfassend:
- Umsetzen eines zweizähnigen organischen Liganden in Gegenwart einer wässrigen Dispersion eines Zeolithen bei einer Temperatur von 0° bis 80 °C für 1 bis 28 Tage, wobei die wässrige Dispersion ein Al/Ligand-Molverhältnis von 0,5 bis 4 aufweist und wobei der Zeolith ein Si/Al-Verhältnis von 1 bis zu einem Wert von kleiner als 2,5 aufweist, um ein inaktives Hybridmaterial und einen freien organischen Liganden zu erhalten;
- Abtrennen und Aktivieren des inaktiven Hybridmaterials zum Erhalten des anorganisch-organischen porösen Hybridmaterials,
wobei der Zeolith die einzige Metallquelle des metallorganischen Gerüstes ist, und das Metall Aluminium ist.

10. Verfahren gemäß Anspruch 9, **dadurch gekennzeichnet, dass** die Temperatur zwischen 15° und 40 °C liegt.

11. Verfahren gemäß Anspruch 9 oder 10, **dadurch gekennzeichnet, dass** die Umsetzung in einem Zeitraum von 2 bis 7 Tagen stattfindet.

12. Verfahren gemäß einem der Ansprüche 9 bis 11, **dadurch gekennzeichnet, dass** die Aktivierung durch solvothermische Auflösung oder durch thermische Zersetzung des freien organischen Liganden durchgeführt wird.

13. Verwendung des anorganisch-organischen porösen Hybridmaterials gemäß einem der Ansprüche 1 bis 7 in einem Verfahren zur Dehydratisierung, Abtrennung oder selektiven Adsorption von Gasen oder Flüssigkeiten.

14. Verwendung gemäß Anspruch 13, **dadurch gekennzeichnet, dass** das anorganisch-organische poröse Hybridmaterial ein Bestandteil eines Polymerverbundmaterials oder einer Membran mit gemischter Matrix ist.

15. Verwendung des anorganisch-organischen porösen Hybridmaterials gemäß einem der Ansprüche 1 bis 7 in einem katalytischen Verfahren.

16. Verwendung der metallorganischen Gerüsthülle gemäß Anspruch 8 in einem Austrocknungsverfahren oder in einem katalytischen Verfahren.

## Revendications

1. Matériau hybride poreux inorganique-organique, comprenant un noyau de zéolite ou d'aluminosilicate amorphe ayant un rapport atomique Si/Al de 1 à une valeur inférieure à 2,5, et une enveloppe de charpente métallo-organique formée par un ligand organique bidenté lié de manière covalente aux atomes d'aluminium de ladite zéolite ou dudit aluminosilicate amorphe.

2. Matériau hybride poreux inorganique-organique selon la revendication 1, **caractérisé en ce que** ladite zéolithe de noyau est une zéolithe de type LTA A ou une zéolithe de type FAUX.

3. Matériau hybride poreux inorganique-organique selon la revendication 1 ou 2, **caractérisé en ce que** ledit ligand organique bidenté est choisi dans le groupe constitué par le téréphtalate, amino-téréphtalate, diamino-téréphtalate, bromotéréphtalate, chlorotéréphtalate, fluorotéréphtalate, iodotéréphtalate, méthyltéréphtalate, diméthyltéréphtalate, nitrotéréphtalate, hydroxytéréphtalate, fumarate, imidazole, pyrazole, naphtalène-2,6-dicarboxylate, biphényl-4,4'-dicarboxylate, 4,4'-bipyridine et 4,4'-hexafluoroisopropylidene-bisbenzoate.

4. Matériau hybride poreux inorganique-organique selon la revendication 3, **caractérisé en ce que** ledit ligand organique est le téréphtalate.

5. Matériau hybride poreux inorganique-organique selon l'une quelconque des revendications 1 à 4, **caractérisé en ce que** ledit noyau est une zéolite,
et **en ce que** ledit matériau hybride a une microporosité de 1 - 2 nanomètres et une mésoporosité de 2 - 10 nanomètres dans ladite charpente métallo-organique, en plus de la microporosité de la zéolithe qui se situe entre 0,1 - 1 nanomètre.

6. Matériau hybride poreux inorganique-organique selon l'une quelconque des revendications 1 à 5, **caractérisé en ce que** ledit matériau hybride a un spectre de diffraction des rayons X comprenant les pics suivants correspondant à la charpente métallo-organique :
| **2 Theta [°]** | **Plan** |
|---|---|
| 8,07 | (1 0 0) |
| 16,18 | (2 0 0) |
avec une variabilité angulaire de ±0,1°, obtenue avec une source de rayonnement Cu Kα1, λ=0,15406 nm.

7. Matériau hybride poreux inorganique-organique selon la revendication 6, **caractérisé en ce que** ledit spectre de diffraction des rayons X comprend les pics suivants correspondant à la charpente métallo-organique :
| **2 Theta [°]** | **Plan** |
|---|---|
| 8,07 | (1 0 0) |
| 16,18 | (2 0 0) |
| 18,11 | (2 1 0) |
avec une variabilité angulaire de ±0,1°, obtenue avec une source de rayonnement Cu Kα1, λ=0,15406 nm.

8. Structure de charpente métallo-organique isolée, constituée de l'enveloppe de la structure de charpente métallo-organique qui a été triée et séparée du matériau hybride poreux inorganique-organique de la revendication 1, **caractérisée en ce que** ladite structure de charpente métallo-organique présente des distances entre les atomes d'aluminium de 1,09 ± 0,01 nm.

9. Procédé d'obtention d'un matériau hybride poreux inorganique-organique comprenant un noyau de zéolithe ou d'aluminosilicate amorphe et une enveloppe de charpente laminaire métallo-organique, comprenant :
- la réaction d'un ligand organique bidenté en présence d'une zéolite en dispersion aqueuse à une température de 0° à 80° C pendant 1 à 28 jours, dans laquelle ladite dispersion aqueuse a un rapport molaire Al/ligand de 0,5 à 4, et dans laquelle ladite zéolite a un rapport Si/Al de 1 à une valeur inférieure à 2,5, pour l'obtention d'un matériau hybride inactif et d'un ligand organique libre ;
- la séparation et l'activation dudit matériau hybride inactif pour l'obtention du matériau hybride poreux inorganique-organique,
dans laquelle ladite zéolite est la seule source de métal de la charpente métallo-organique, et ledit métal est l'aluminium.

10. Procédé selon la revendication 9, **caractérisé en ce que** ladite température est de 15° à 40° C.

11. Procédé selon la revendication 9 ou 10, **caractérisé en ce que** ladite réaction a lieu dans une période de 2 à 7 jours.

12. Procédé selon l'une quelconque des revendications 9 à 11, **caractérisé en ce que** ladite activation est effectuée par dissolution solvothermique ou par décomposition thermique dudit ligand organique libre.

13. Utilisation du matériau hybride poreux inorganique-organique selon l'une quelconque des revendications 1 à 7, dans un procédé de déshydratation, de séparation ou d'adsorption sélective de gaz ou de liquides.

14. Utilisation selon la revendication 13, **caractérisée en ce que** ledit matériau hybride poreux inorganique-organique est un composant d'un composite polymère ou d'une membrane à matrice mixte.

15. Utilisation du matériau hybride poreux inorganique-organique de l'une quelconque des revendications 1 à 7, dans un procédé catalytique.

16. Utilisation de l'enveloppe de charpente métallo-organique de la revendication 8, dans un procédé de dessiccation ou dans un procédé catalytique.
